(19) Europäisches Patentamt
European Patent Office
Office européen des brevets

(11) **EP 4 715 423 A1**

(12) **DEMANDE DE BREVET EUROPEEN**

(43) Date de publication:
**25.03.2026 Bulletin 2026/13**

(21) Numéro de dépôt: **25202077.1**

(22) Date de dépôt: **15.09.2025**

(51) Classification Internationale des Brevets (IPC):
**G01S 7/481** (2006.01)    **G01S 17/89** (2020.01)

(52) Classification Coopérative des Brevets (CPC):
**G01S 7/4817; G01S 7/4814; G01S 7/4816; G01S 17/89**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **16.09.2024 FR 2409834**

(71) Demandeur: **Commissariat à l'Energie Atomique et aux Energies Alternatives
75015 Paris (FR)**

(72) Inventeurs:
• **BECKER, Sébastien**
  **38054 GRENOBLE CEDEX 09 (FR)**
• **TEMPLIER, François**
  **38054 GRENOBLE CEDEX 09 (FR)**
• **PELISSIER, Michaël**
  **38054 GRENOBLE CEDEX 09 (FR)**

(74) Mandataire: **Regimbeau
20, rue de Chazelles
75847 Paris Cedex 17 (FR)**

(54) **APPAREIL ET PROCÉDÉ DE DÉTERMINATION DE LA POSITION D'UN OBJET DEVANT UN ÉCRAN D AFFICHAGE**

(57)      L'invention concerne un appareil comprenant :
- Un écran (1) comportant un substrat (2) qui supporte :
◦ des photoémetteurs (3) ;
◦ un photodétecteur (4) ;
◦ une source d'émission (5) d'un faisceau laser ; et
◦ un système de balayage de faisceau (6) couplé à ladite source et apte à être piloté pour balayer le faisceau laser dans une scène située devant le substrat ;

- un système électronique configuré pour :
◦ piloter le système de balayage de faisceau au moyen d'une consigne d'angle de balayage;
◦ acquérir du photodétecteur (4) un signal photo-généré suite à la détection du faisceau laser rétrodiffusé par un objet de la scène éclairé par le faisceau laser conformément à la consigne d'angle de balayage ;
◦ déterminer une position de l'objet de la scène, à partir du signal photo-généré et de la consigne d'angle de balayage.

## FIG. 1A

EP 4 715 423 A1

Description

## DOMAINE TECHNIQUE

Le domaine de l'invention est celui des écrans d'affichage d'images. L'invention vise plus particulièrement un écran interactif combinant une fonction d'émission lumineuse et une fonction de capture optique 3D permettant de faire une cartographie de profondeur de la scène se situant devant l'écran.

## TECHNIQUE ANTÉRIEURE

Une technologie 3D sans contact appelée « Infra-Red Intelligent Surface » (IRIS) utilise un capteur composé d'émetteurs et de récepteurs infra-rouge (IR) entrelacés répartis sur une surface. Cette technologie IRIS est par exemple décrite dans Santoul, E., Hemery, E. and Tuckey, J. (2023), Infra-Red Intelligent Surface for Near-Field Touchless Displays. Information Display, 39: 18-21. https://doi.org/10.1002/msid.1408

La technologie IRIS est basée sur la mesure de l'intensité et la connaissance de la géométrie du capteur pour déduire un nuage de points 3D de la scène au-dessus du capteur. Le capteur fonctionne en champ proche, depuis la surface jusqu'à quelques dizaines de centimètres au-dessus dans un champ de détection continu.

Le capteur fonctionne plus précisément en émettant d'abord un motif contrôlé de lumière IR à partir du réseau d'émetteurs. La lumière est ensuite réfléchie par les objets devant le capteur et la lumière réfléchie est détectée par le réseau de récepteurs. La lumière détectée est traitée par un circuit de traitement du signal pour éliminer le bruit et les sources de lumière ambiante. L'image 2D résultante contient des informations sur le type et les positions x, y, z des objets devant le capteur. Ceci est utilisé pour créer un nuage de points 3D de la scène devant le capteur. Ces données permettent au système de déduire l'intention d'un utilisateur et d'interagir en conséquence.

La portée maximale de détection du capteur est de l'ordre de grandeur de la taille de la surface, ce qui signifie qu'un capteur de la taille d'un mobile multifonction pourrait détecter des objets jusqu'à quelques dizaines de centimètres, tandis qu'un capteur de la taille d'un écran de 55 pouces pourrait détecter des objets jusqu'à quelques mètres.

Le capteur IRIS industrialisé sera constitué d'un empilement contenant plusieurs couches dont un substrat, des photoéléments (émetteurs et récepteurs IR ou pixels RVB) et une couche de collimation. La couche de collimation permet de manipuler la lumière infrarouge de manière à ce qu'elle converge vers les récepteurs. Cette couche de collimation introduit toutefois une complexité technologique supplémentaire.

## EXPOSÉ DE L'INVENTION

L'invention a pour objectif de s'affranchir de la couche de collimation tout en améliorant la performance de capture 3D en champ lointain, typiquement supérieur à 30 cm.

A cet effet, l'invention propose un appareil comprenant :

- un écran comportant un substrat qui supporte :

  ◦ un ensemble de photoémetteurs ;
  ◦ un photodétecteur ;
  ◦ une source d'émission d'un faisceau laser ; et
  ◦ un système de balayage de faisceau couplé à ladite source et apte à être piloté pour balayer le faisceau laser émis par ladite source dans une scène située devant le substrat ;

- un système électronique configuré pour :

  ◦ piloter le système de balayage de faisceau au moyen d'une consigne d'angle de balayage;
  ◦ acquérir du photodétecteur un signal photo-généré suite à la détection du faisceau laser rétrodiffusé par un objet de la scène éclairé par le faisceau laser conformément à la consigne d'angle de balayage ;
  ◦ déterminer une position de l'objet de la scène, à partir du signal photo-généré et de la consigne d'angle de balayage.

Certains aspects préférés mais non limitatifs de cet appareil sont les suivants :

- le système électronique est en outre configuré pour modifier une consigne de pilotage des photoémetteurs en réponse à la détermination de la position de l'objet ;
- la source laser d'émission du faisceau laser et le système de balayage de faisceau sont agencés sur le substrat ;
- l'écran comprend en outre un capot de recouvrement recouvrant l'ensemble de photoémetteurs et le photodétecteur et la source laser d'émission du faisceau laser et le système de balayage de faisceau sont agencés sur le capot de recouvrement ;
- le capot de recouvrement comprend un guide d'onde configuré pour acheminer le faisceau laser depuis la source d'émission d'un faisceau laser vers le système de balayage de faisceau ;
- le système de balayage de faisceau comprend un réseau à commande de phase optique et un déflecteur ;
- la source d'émission du faisceau laser est une source monochromatique accordable et le déflecteur est un réseau de diffraction ;
- le système de balayage de faisceau est un système opto-mécanique ;

- le système de balayage de faisceau comprend une métasurface programmable ;
- le photodétecteur est incorporé à une puce élémentaire qui comprend au moins l'un des photoémetteurs et un circuit électronique ;
- pour déterminer la position de l'objet de la scène le système électronique est configuré pour déterminer un temps de vol, de manière directe ou indirecte, du faisceau laser depuis son émission jusqu'à sa détection par le photodétecteur ;
- pour déterminer la position de l'objet de la scène le système électronique est configuré pour réaliser une mesure différentielle de temps d'arrivée.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1A et la figure 1B sont des schémas, respectivement en vue de côté et en vue de dessus, d'un écran d'un appareil selon un premier mode de réalisation possible de l'invention ;
- la figure 2 est un schéma en vue de côté d'un écran d'un appareil selon un deuxième mode de réalisation possible de l'invention ;
- la figure 3 est un schéma en vue de dessus d'un écran d'un appareil selon un troisième mode de réalisation possible de l'invention ;
- la figure 4 est un schéma illustrant le principe d'une mesure de distance pouvant être mise en œuvre par un appareil conforme à l'invention ;
- la figure 5 est un schéma illustrant l'intérêt de prévoir plusieurs sources d'émission laser dans un appareil conforme à l'invention ;
- la figure 6 est un schéma d'une source d'émission à balayage pouvant être utilisée dans le cadre de l'invention.

**EXPOSÉ DÉTAILLÉ DE MODES DE RÉALISATION PARTICULIERS**

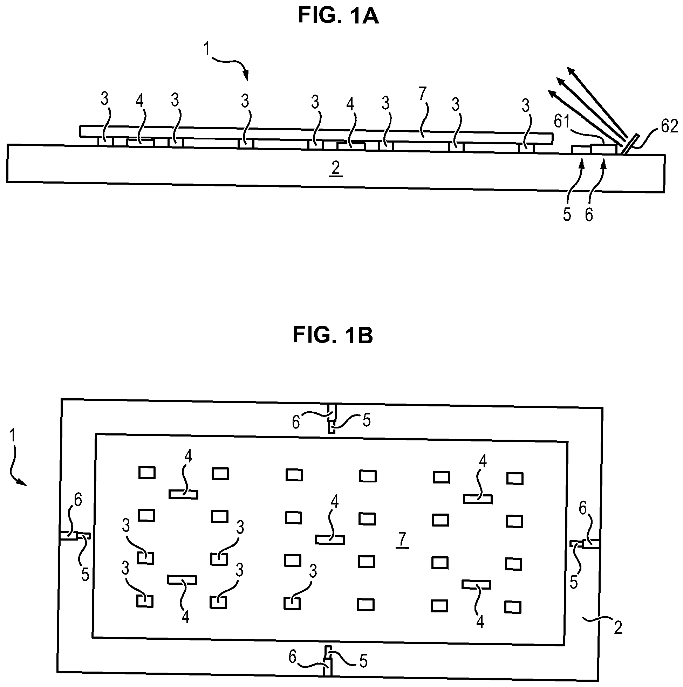

L'invention porte sur un appareil comprenant un écran d'affichage 1, 10, 100 par exemple d'ordinateur, de mobile multifonction, de télévision ou de tablette. En référence aux figures 1A, 1B, 2 et 3, l'écran comporte un substrat 2, par exemple en verre, qui supporte un ensemble de photoémetteurs 3 et un ou plusieurs photodétecteurs 4. L'écran comporte par ailleurs un capot de recouvrement 7, par exemple en verre, qui recouvre les photoémetteurs 3 et le ou les photodétecteurs 4.

Le substrat 2 supporte de préférence une pluralité de photodétecteurs 4 afin de rendre la mesure décrite par la suite plus robuste (par exemple par moyennage des signaux de photodétection délivrés par les photodétecteurs 4). Il est donc possible de répartir plusieurs photodétecteurs sur la surface de l'écran, sans qu'il y ait forcément le même nombre de photodétecteurs 4 que de photoémetteurs 3.

Les photoémetteurs 3 dudit ensemble forment les pixels de l'écran. Ils sont typiquement agencés selon un réseau matriciel. Dans une réalisation possible, les photoémetteurs 3 sont des microLED, par exemple à base de GaN. Les microLED peuvent être des pixels intelligents, aussi appelés « smart-pixels » en langue anglaise, tels que décrits dans Templier, F. (2023), Micro-LED Technology: A Unique Opportunity Toward "More Than Displays". Information Display, 39: 13-17. https://doi.org/10.1002/msid.1407. Chaque pixel de l'écran peut ainsi être formé par une puce élémentaire d'émission de lumière qui comprend au moins une LED et un circuit électronique comprenant un organe de commande de l'au moins une LED. De préférence, chaque puce élémentaire comprend une pluralité de sous-pixels comprenant chacun une LED ; typiquement trois sous-pixels associés à des LED émettant respectivement dans le rouge, le vert et le bleu. L'écran peut en outre comporter un circuit de pilotage CMOS (« Complementary Metal Oxide Semiconductor ») sur le substrat (en verre par exemple) pour l'amenée des signaux de commande aux smart-pixels, ce circuit CMOS prenant par exemple la forme d'un ensemble de lignes et colonnes conductrices.

Les microLEDS ne sont pas nécessairement de type « smart-pixel », et peuvent être pilotés par un circuit TFT (« Thin-Film Transistor ») plutôt que par un circuit CMOS. Les photoémetteurs peuvent être des diodes organiques dites « OLED » ou bien des pixels à cristaux liquides dits « LCD ».

Le ou les photodétecteurs 4 sont aptes à détecter un rayonnement incident et à délivrer un signal de photodétection. Ils sont par exemple aptes à capturer un rayonnement dans le proche infrarouge (en anglais « near infrared »), dans la gamme de détection du silicium (inférieure à 1 $\mu$m). Alternativement, ils peuvent être aptes à capturer un rayonnement dans l'infrarouge courte longueur d'onde (en anglais « short-wave infrared », entre 1 et 2 $\mu$m, typiquement 1,55 $\mu$m) ce qui leur permet d'être moins sensibles à l'émission des photoémetteurs 3.

Dans une réalisation possible, un photodétecteur 4 peut être porté par une puce élémentaire d'émission de lumière telle que décrite précédemment et dont le circuit électronique comprend un organe de lecture et d'éventuel traitement du signal de photodétection délivré par le photodétecteur.

Le substrat 2 supporte par ailleurs (au moins) une source d'émission 5 d'un faisceau laser et (au moins) un système de balayage de faisceau 6 couplé à ladite source 5 et apte à être piloté pour balayer le faisceau laser émis par ladite source dans une scène située devant le substrat.

Le faisceau laser peut être un faisceau dans le proche infrarouge ou dans l'infrarouge courte longueur d'onde. Il dispose d'une portée de plusieurs mètres, voire de dizaines de mètres, là où la technologie IRIS est limitée à une trentaine de centimètres.

Le système de balayage de faisceau 6 peut notamment être piloté au moyen d'une consigne d'angle de balayage pour que le faisceau laser émis vers la scène présente un angle d'émission donné vis-à-vis du substrat. Pour une consigne d'angle de balayage donnée, la source d'émission 5 et le système de balayage 6 réalisent ainsi un éclairage ponctuel de la scène. Ensemble, la source d'émission 5 et le système de balayage 6 forment une source d'émission à balayage.

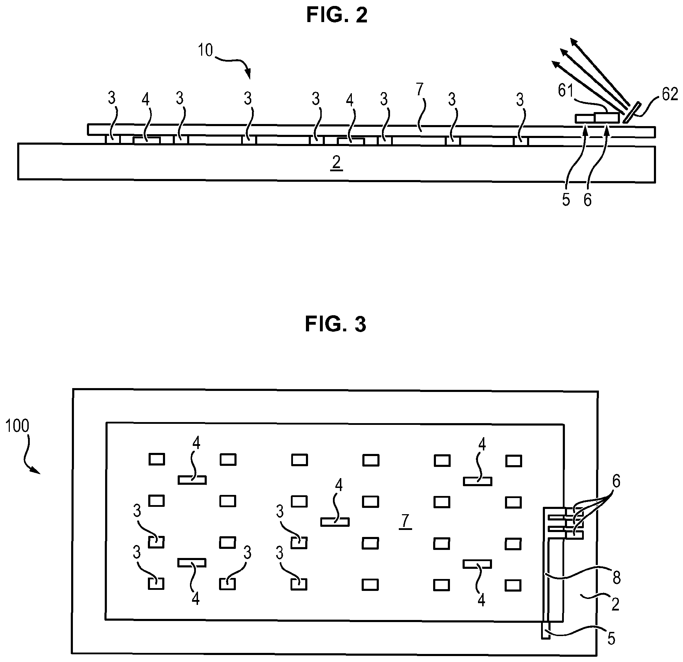

Comme représenté sur les figures 1A, 1B et 3, la source d'émission 5 du faisceau laser et le système de balayage de faisceau 6 peuvent être agencés sur le substrat 2, de préférence en périphérie de celui-ci. Alternativement, comme représenté sur la figure 2, la source d'émission 5 du faisceau laser et le système de balayage de faisceau 6 peuvent être agencés sur le capot de recouvrement 7, de préférence en périphérie de celui-ci.

Dans une réalisation possible illustrée sur la figure 3, le capot de recouvrement peut comprendre un guide d'onde 8 configuré pour acheminer le faisceau laser depuis la source d'émission 5 vers un ou plusieurs systèmes de balayage de faisceau 6.

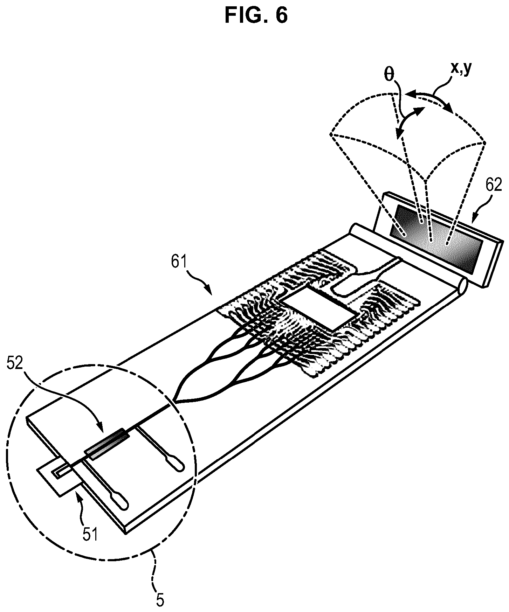

Comme illustré sur la figure 6, le système de balayage de faisceau 6 peut comprendre un réseau à commande de phase optique 61 et un déflecteur 62. Le réseau à commande de phase optique 61 peut être piloté, notamment au moyen d'une chaufferette, pour réaliser un balayage du faisceau dans le plan du substrat 2 (balayage horizontal en x, y). Le déflecteur est un déflecteur actif (par exemple opto-mécanique) ou passif qui permet de réaliser un balayage du faisceau dans un plan perpendiculaire au substrat 2 (balayage vertical avec un angle θ par rapport à une normale au substrat). Dans une réalisation possible, la source d'émission 5 du faisceau laser est une source monochromatique accordable et le déflecteur est un déflecteur passif prenant la forme d'un réseau de diffraction 62 permettant le balayage vertical avec un angle θ fixé par la longueur d'onde de la source monochromatique accordable. La source monochromatique accordable peut être constituée par l'association d'une diode superluminescente 51 et d'un réflecteur de Bragg 52 permettant d'accorder la longueur d'onde par effet thermo-optique, comme par exemple décrit dans Kim, SM., Lee, ES., Chun, KW. et al. Compact solid-state optical phased array beam scanners based on polymeric photonic integrated circuits. Sci Rep 11, 10576 (2021).

Le système de balayage de faisceau 6 peut comprendre plusieurs déflecteurs (présentant typiquement différentes gammes angulaires de déflexion) associés à une même source d'émission. Le système de balayage de faisceau 6 peut également comprendre un déflecteur associé à une ou plusieurs sources d'émission. Il est également possible de prévoir plusieurs sources d'émission différentes associées à des déflecteurs différents.

Dans une autre réalisation possible, le système de balayage de faisceau peut être un système opto-mécanique exploitant par exemple un ou des miroirs de type MEMS (de l'anglais « Micro Electro-Mechanical Systems » désignant des systèmes microélectromécaniques). Le système opto-mécanique peut comprendre un scanner à faisceau laser LBS (« Laser Beam Scanner ». Dans encore une autre réalisation possible, le système de balayage de faisceau peut comprendre une métasurface programmable à base de matériaux à changement de phase.

L'appareil selon l'invention comprend par ailleurs un système électronique permettant le pilotage électro-optique de la (des) source(s) laser et du (des) photodétecteur(s), et le traitement des données. Ce système électronique peut prendre la forme d'un circuit intégré monolithique ou distribué. Par exemple, une partie des traitements mis en œuvre par le système électronique peut être réalisée par le circuit électronique d'un « smart-pixel » accueillant le photodétecteur. Il peut s'agir des fonctions élémentaires de commande et d'amplification faible bruit des signaux. Une autre partie des traitements peut être réalisée par un circuit intégré situé en bord d'écran ou déporté en dehors de l'écran, tout en étant relié électriquement aux composants électro-optiques de l'écran. Ce circuit intégré est par exemple en charge d'agréger les données et de les traiter afin, d'une part, d'assurer une synchronisation temporelle et, d'autre part, d'extraire l'information utile (par exemple une mesure de temps de vol).

Le système électronique est configuré pour piloter le système de balayage de faisceau afin que le faisceau balaie la scène située devant le substrat en éclairant, par exemple, chaque point de la scène successivement. A un instant donné, le système électronique fournit une consigne d'angle de balayage au système de balayage de faisceau afin que celui-ci dirige le faisceau vers un point de la scène selon un angle d'émission.

Le système électronique est par ailleurs configuré pour :

- acquérir du photodétecteur 4 un signal photo-généré suite à la détection du faisceau laser rétrodiffusé par un objet de la scène éclairé par le faisceau laser conformément à la consigne d'angle de balayage ; et
- déterminer une position de l'objet de la scène, à partir du signal photo-généré et de la consigne d'angle de balayage.

Par exemple, le système électronique peut être configuré pour déterminer un temps d'arrivée du faisceau laser rétrodiffusé par l'objet, à partir d'un signal photo-généré et déterminer la position de l'objet à partir du temps d'arrivée et de la consigne d'angle de balayage.

Le système électronique peut en outre être configuré pour modifier une consigne de pilotage des photoémetteurs 3 en réponse à la détermination de la position de l'objet. L'écran est ainsi interactif en ce que son affichage est modifié en fonction de la scène située devant le substrat, par exemple en fonction d'une interaction sans contact d'un utilisateur avec l'écran.

Dans un premier mode de réalisation, pour déterminer la position de l'objet de la scène, le système électronique est configuré pour déterminer un temps de vol, direct ou indirect, du faisceau laser depuis son émission jusqu'à sa détection par le photodétecteur.

Par détermination d'un temps de vol direct, on entend une mesure du temps écoulé entre l'émission, par la source d'émission à balayage 5, 6, d'une impulsion lumineuse en direction d'un objet de la scène et le temps d'arrivée de cette impulsion au niveau du photodétecteur 4. Dans ce cas de figure, le photodétecteur 4 peut être une photodiode à avalanche APD (acronyme de « Avalanche PhotoDiode) ou une photodiode à avalanche à photon unique SPAD (acronyme de « Single Photon Avalanche Diode »).

Par détermination d'un temps de vol indirect, on entend une émission, par la source d'émission à balayage 5, 6, d'une lumière modulée (par exemple en amplitude)et une mesure (par démodulation)du décalage de phase de la lumière reçue par le photodétecteur. Dans ce cas de figure, le photodétecteur 4 peut être un détecteur à modulation de QE (QEM), un détecteur de champ électronique latéral (LEF) ou un démodulateur photonique assisté par courant CAPD (acronyme de « Current Assisted Photonic Demodulator »).

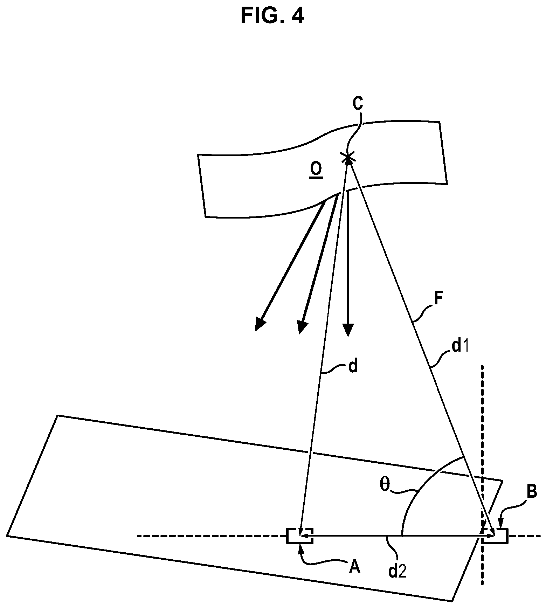

Comme représenté sur la figure 4, le faisceau laser est émis depuis un point B selon un angle d'émission θ par rapport à la surface du substrat ou du capot. Le faisceau laser éclaire un point C d'un objet O de la scène et est rétrodiffusé dans toutes les directions et notamment dans la direction du photodétecteur 4 agencé au point A.

Connaissant l'angle θ ($\widehat{ABC}$), défini à chaque instant par la consigne d'angle de balayage et la position du photodétecteur 4, la position dans l'espace du point C est déterminée par la distance d séparant les points A et C.

On a : $d^2 = d1^2 + d2^2 + 2d1.d2.\cos\theta$, où $d1$ correspond à la distance séparant les points B et C et où d2 correspond à la distance séparant les points B et A.

Le temps de vol $T$ entre les points B, C et A s'écrit $T = \frac{d1+d}{c}$, où c est la vitesse de la lumière dans le vide. La distance d s'écrit alors :

$$d = \frac{T^2.c^2 + d2^2 + 2T.c.d2.\cos\theta}{2(T.c + d2.\cos\theta)}$$

Il est donc possible de déterminer la distance d séparant le point éclairé C du photodétecteur 4 agencé au point A à l'aide d'une mesure de temps de vol, connaissant par ailleurs la consigne d'angle de balayage θ et la géométrie $d2$ du système d'émission-détection du faisceau laser. Connaissant cette distance $d$ et l'angle θ, il est possible de déterminer la position 3D du point C. En pilotant le système de balayage pour éclairer successivement les différents points de la scène, il s'avère alors possible de cartographier en 3D l'ensemble de la scène devant l'écran.

La solution décrite ci-dessus s'appuie sur une estimation de distance (d et d1) par rapport à une mesure de temps d'arrivée des photons. Pour assurer une estimation de la position sans ambiguïté dans l'espace 3D, il peut être nécessaire d'utiliser au moins trois photodétecteurs et de réaliser des mesures de triangulation. Cela s'avère notamment utile en cas de réflexions parasites.

Par ailleurs, afin d'améliorer la précision de l'estimation de temps d'arrivée, il peut être utile de prévoir un dispositif d'horloge de synchronisation en fréquence et en phase très précis entre la source d'émission à balayage et le(s) photodétecteur (s) afin d'estimer précisément le temps d'arrivée. Une difficulté réside dans la taille de l'écran qui peut être relativement grande au regard de la taille du photodétecteur et de la source d'émission à balayage. Des solutions de base de temps/horloge commune entre la source d'émission à balayage et le photodétecteur ou de récupération d'horloge de type boucle à verrouillage de phase PLL (acronyme de « Phase Locked Loop ») au sein du photodétecteur peuvent être mises en œuvre pour satisfaire cette condition de synchronisation.

Dans un deuxième mode de réalisation, pour déterminer la position de l'objet de la scène, le système électronique est configuré pour réaliser une mesure différentielle de temps d'arrivée. En prévoyant plusieurs photodétecteurs distribués sur le substrat, il est effectivement possible d'effectuer une mesure différentielle de temps d'arrivée entre les différents capteurs ainsi distribués. Ces derniers sont synchronisés entre eux mais pas nécessairement avec la source d'émission à balayage et leurs positions sont prédéfinies et connues.

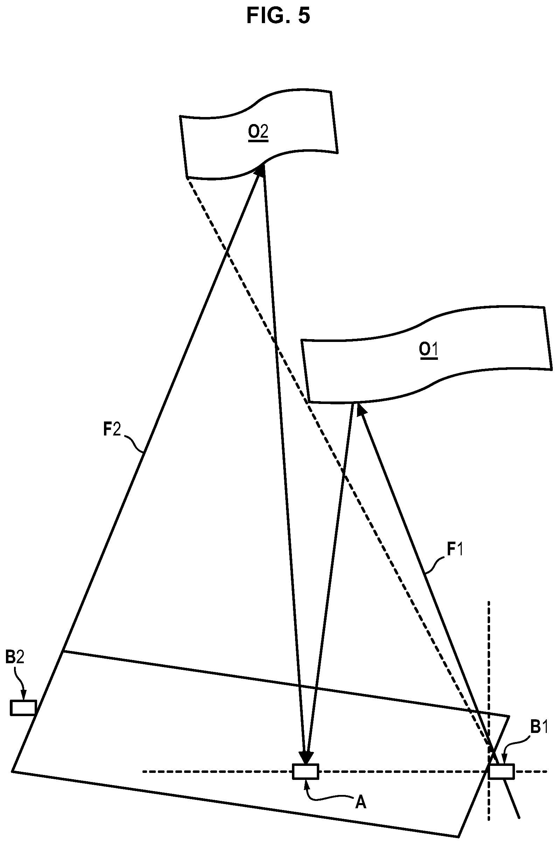

On a représenté sur la figure 5 l'intérêt de disposer de plusieurs sources d'émission à balayage (ici pour l'émission d'un faisceau F1 depuis un point B1 et l'émission d'un faisceau F2 depuis un point B2) et à les répartir en périphérie de l'écran pour mesurer la distance de formes très convexes / concaves ou masquées par l'avant-scène. Sur cette figure 5, l'objet O1 masque, pour le faisceau F1, l'objet O2. En revanche, l'objet O2 peut être atteint par le faisceau F2 et le temps d'arrivée de ce faisceau F2 au niveau du photodétecteur agencé au point A peut être mesuré.

L'invention n'est pas limitée à l'appareil précédemment décrit mais s'étend également à un procédé de contrôle d'un tel appareil, ce procédé comprenant la mise en œuvre des étapes suivantes par le système électronique de l'appareil :

- piloter le système de balayage de faisceau au moyen d'une consigne d'angle de balayage;
- acquérir du photodétecteur un signal photo-généré suite à la détection du faisceau laser rétrodiffusé par un objet de la scène éclairé par le faisceau laser conformément à la consigne d'angle de balayage ;
- déterminer une position de l'objet de la scène, à partir du signal photo-généré et de la consigne d'angle de balayage.

L'invention s'étend également à un produit programme d'ordinateur comprenant des instructions qui, lorsqu'elles sont exécutées par un ordinateur, conduisent celui-ci à mettre en œuvre ce procédé de contrôle.

**Revendications**

1. Appareil comprenant :

   - un écran (1, 10, 100) comportant un substrat (2) qui supporte :

      ◦ un ensemble de photoémetteurs (3) ;
      ◦ un photodétecteur (4) ;
      ◦ une source d'émission (5, 51, 52) d'un faisceau laser (F, F1, F2) ; et
      ◦ un système de balayage de faisceau (6, 61, 62) couplé à ladite source et apte à être piloté pour balayer le faisceau laser émis par ladite source dans une scène située devant le substrat ;

   - un système électronique configuré pour :

      ◦ piloter le système de balayage de faisceau au moyen d'une consigne d'angle de balayage;
      ◦ acquérir du photodétecteur (4) un signal photo-généré suite à la détection du faisceau laser rétrodiffusé par un objet (O, O1, O2) de la scène éclairé par le faisceau laser conformément à la consigne d'angle de balayage ;
      ◦ déterminer une position de l'objet de la scène, à partir du signal photo-généré et de la consigne d'angle de balayage.

2. Appareil selon la revendication 1, dans lequel le système électronique est en outre configuré pour modifier une consigne de pilotage des photoémetteurs en réponse à la détermination de la position de l'objet.

3. Appareil selon l'une des revendications 1 et 2, dans lequel la source laser d'émission (5) du faisceau laser et le système de balayage (6) de faisceau sont agencés sur le substrat.

4. Appareil selon l'une des revendications 1 à 3, dans lequel l'écran (1, 10, 100) comprend en outre un capot de recouvrement (7) recouvrant l'ensemble de photoémetteurs et le photodétecteur et dans lequel la source laser d'émission (5) du faisceau laser et le système de balayage (6) de faisceau sont agencés sur le capot de recouvrement.

5. Appareil selon la revendication 4, dans lequel le capot de recouvrement comprend un guide d'onde (8) configuré pour acheminer le faisceau laser depuis la source d'émission d'un faisceau laser vers le système de balayage de faisceau.

6. Appareil selon l'une des revendications 1 à 5, dans lequel le système de balayage de faisceau comprend un réseau à commande de phase optique (61) et un déflecteur (62).

7. Appareil selon la revendication 6, dans lequel la source d'émission du faisceau laser est une source monochromatique accordable (51, 52) et dans lequel le déflecteur (62) est un réseau de diffraction.

8. Appareil selon l'une des revendications 1 à 5, dans lequel le système de balayage de faisceau est un système opto-mécanique.

9. Appareil selon l'une des revendications 1 à 5, dans lequel le système de balayage de faisceau comprend une métasurface programmable.

10. Appareil selon l'une des revendications 1 à 9, dans lequel le photodétecteur est incorporé à une puce élémentaire qui comprend au moins l'un des photoémetteurs et un circuit électronique.

11. Appareil selon l'une des revendications 1 à 10, dans lequel pour déterminer la position de l'objet de la scène le système électronique est configuré pour déterminer un temps de vol, de manière directe ou indirecte, du faisceau laser depuis son émission jusqu'à sa détection par le photodétecteur.

12. Appareil selon l'une des revendications 1 à 10, dans lequel pour déterminer la position de l'objet de la scène le système électronique est configuré pour réaliser une mesure différentielle de temps d'arrivée.

13. Procédé de contrôle d'un appareil selon l'une des revendications 1 à 12, comprenant la mise en œuvre des étapes suivantes par le système électronique :

   - piloter le système de balayage de faisceau au moyen d'une consigne d'angle de balayage;
   - acquérir du photodétecteur (4) un signal photo-généré suite à la détection du faisceau laser rétrodiffusé par un objet (O, O1, O2) de la scène éclairé par le faisceau laser conformément à la consigne d'angle de balayage ;
- déterminer une position de l'objet de la scène, à partir du signal photo-généré et de la consigne d'angle de balayage.

**14.** Programme d'ordinateur comprenant des instructions qui, lorsqu'elles sont exécutées par un ordinateur, conduisent celui-ci à mettre en œuvre le procédé selon la revendication 13.

FIG. 1A

FIG. 1B

## FIG. 2

## FIG. 3

# FIG. 4

# FIG. 5

FIG. 6

# EP 4 715 423 A1

Europäisches Patentamt
European Patent Office
Office européen des brevets

## RAPPORT DE RECHERCHE EUROPEENNE

Numéro de la demande

EP 25 20 2077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/209729 A1 (CHEN TONG [US] ET AL) 2 juillet 2020 (2020-07-02) * alinéas [0036], [0040], [0062], [0064], [0084], [0089]; figures 1A, 7A, 7B * | 1-14 | INV. G01S7/481 G01S17/89 |
| A | WO 2022/114376 A1 (KOREA ELECTRONICS TECHNOLOGY [KR]) 2 juin 2022 (2022-06-02) * alinéa [0027] - alinéa [0031]; figure 4 * | 5 | |
| A | TEMPLIER F: "MicroLED Technology: A Unique Opportunity Toward "More Than Displays"", INFORMATION DISPLAY, 1 juillet 2023 (2023-07-01), XP093262028, DOI: doi:10.1002/msid.1407 * page 15 - page 16; figure 3 * | 10 | |
| A | CN 116 798 350 A (SENSORTEK TECH CORP) 22 septembre 2023 (2023-09-22) * alinéa [0011] - alinéa [0013]; figure 1 * | 1,13,14 | DOMAINES TECHNIQUES RECHERCHES (IPC)  G01S |
| A | US 2016/187469 A1 (JEONG PIL WON [KR] ET AL) 30 juin 2016 (2016-06-30) * alinéas [0006], [0154], [0156], [0193], [0197], [0198], [0199], [0200]; figure 13 * | 1,13,14 | |

Le présent rapport a été établi pour toutes les revendications

| Lieu de la recherche | Date d'achèvement de la recherche | Examinateur |
|---|---|---|
| Munich | 21 janvier 2026 | Kirscher, Jérôme |

EPO FORM 1503 03.82 (P04C02)

**EP 4 715 423 A1**

## ANNEXE AU RAPPORT DE RECHERCHE EUROPEENNE
## RELATIF A LA DEMANDE DE BREVET EUROPEEN NO.

EP 25 20 2077

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-01-2026

| Document brevet cité au rapport de recherche | Date de publication | Membre(s) de la famille de brevet(s) | Date de publication |
|---|---|---|---|
| US 2020209729 A1 | 02-07-2020 | CN 210983445 U<br>US 2020209729 A1<br>WO 2020139836 A1 | 10-07-2020<br>02-07-2020<br>02-07-2020 |
| WO 2022114376 A1 | 02-06-2022 | KR 20220074519 A<br>WO 2022114376 A1 | 03-06-2022<br>02-06-2022 |
| CN 116798350 A | 22-09-2023 | CN 116798350 A<br>TW 202331681 A<br>US 2023252936 A1 | 22-09-2023<br>01-08-2023<br>10-08-2023 |
| US 2016187469 A1 | 30-06-2016 | KR 20150019926 A<br>US 2016187469 A1<br>WO 2015023145 A1 | 25-02-2015<br>30-06-2016<br>19-02-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SANTOUL, E** ; **HEMERY, E** ; **TUCKEY, J.** Infra-Red Intelligent Surface for Near-Field Touchless Displays.. *Information Display*, 2023, vol. 39, 18-21, https://doi.org/10.1002/msid.1408
- **TEMPLIER, F**. MicroLED Technology: A Unique Opportunity Toward ''More Than Displays. *Information Display*, 2023, vol. 39, 13-17, https://doi.org/10.1002/msid.1407

- **KIM, SM** ; **LEE, ES.** ; **CHUN, KW. et al.** Compact solid-state optical phased array beam scanners based on polymeric photonic integrated circuits.. *Sci Rep*, 2021, vol. 11, 10576